# EUROPEAN PATENT SPECIFICATION

(11) **EP 3 560 752 B1**
(45) Date of publication and mention of the grant of the patent: **31.07.2024**
(21) Application number: 19466002.3
(22) Date of filing: 23.04.2019
(51) Int. Cl.: B60M 1/36, B60M 1/30, B60L 5/42

(54) **DEVICE FOR TRANSFER OF INCREASED ELECTRIC CURRENT TO TROLLEYBUS**
VORRICHTUNG ZUR ÜBERTRAGUNG VON GROSSEN STRÖMEN ZU OBERLEITUNGSBUSSEN
DISPOSITIF POUR LA TRANSMISSION DE COURANTS IMPORTANTS À UN TROLLEYBUS

(30) Priority: 24.04.2018 CZ 20181950
(43) Date of publication of application: 30.10.2019
(73) Proprietor: Faiveley Transport Czech a.s., 326 00 Plzen (CZ)
(72) Inventor: Kucera, Lukas, 312 00 Plzen (CZ); Lorenc, Tomas, 301 00 Plzen (CZ)
(74) Representative: Polacek, Jiri

(56) References cited:
- EP-A1- 3 225 452
- WO-A2-2010/134763
- DE-A1- 102009 013 822
- DE-A1- 102015 014 486

## Description

### Technical Field

This invention relates to a device for transfer of increased electric current to trolleybus, particularly for recharging traction batteries.

### Background Art

Electricity is supplied to trolleybus from overhead wires, where a groove in a carbon insert touches against each wire. A solution described in patent no. CS 262717 is known, wherein a pair of clamps is provided for retaining two overhead wire ends being connected. The clamps are mutually connected with strips whose bottom-facing sides are adapted for contact with a current collector. The strips extend into the space between the edges of a shoe body, inside which the carbon insert is installed and in which the overhead wire runs. This configuration provides a smooth transition from one overhead wire end to the other at their point of connection. The electric current transfer between the strips and the carbon insert corresponds to the electric current transfer between the overhead wire and the groove made in the carbon insert.

With development of trolleybuses equipped with traction batteries and with an off-wire capability, the required amount of the charging current exceeds the transfer capacity between the overhead wire and the carbon insert. Battery trolleybuses are being developed, in which the electric current transfer requirement is much larger than the capacity provided by the contact between the carbon insert and the overhead wire. Moreover, local overheating of the overhead wire occurs at the point of contact between the overhead wire and the carbon insert, which may result in overhead wire breakage.

The document EP3225452A1 describes a system where rotating contact elements permit and increased current transfer.

### Disclosure of Invention

This device as claimed in claim 1 is intended for transfer of increased electric current to trolleybus, particularly for recharging traction batteries. The overhead wire is provided with a flat member, from which an axially-disposed ridge protrudes downwards and is aligned with the direction of the overhead wire. The bottom of the flat member is provided for contact with edges of a shoe body in a trolley head on a trolley pole. The edges of the shoe body are pressed against the flat member from below by a force exerted by springs on the trolley pole. The distance between the flat member and the bottom of a groove made in a carbon insert is greater than the height of the axially-disposed ridge above the flat member. This configuration provides electric current transfer through the contact between the shoe body edges and the flat member, while preventing electric current transfer via the carbon insert. Electric current transfer can be provided when the vehicle is stationary, as well as when it is moving along the length of the flat member. Thanks to the metal-to-metal contact between the shoe body edges and the flat member, the carbon insert is not exposed to wear. The flat member may be either directly connected to the overhead wire, or provided with a separate power supply lead. The flat member covers the places of contact with the shoe body edges, reducing the adverse effects of weather elements, such as rain, snow and ice.

### Description of Drawings

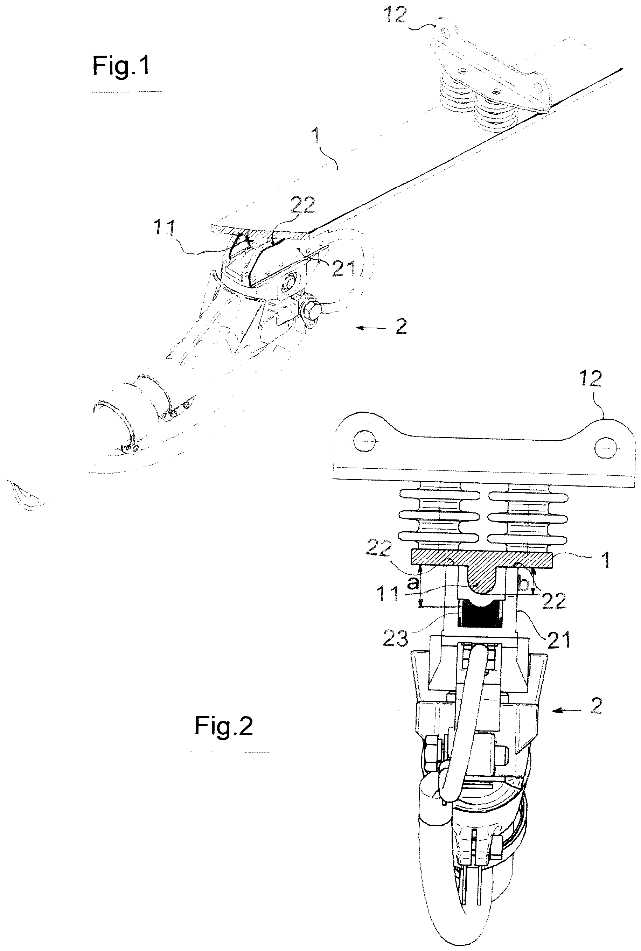

A general axonometric view of the contact between the edge of a shoe body in a trolley head on a trolley pole and a flat member is shown in Fig. 1, whereas a cross-sectional view of the contact between the edge of the shoe body and the flat member with an indication of separation between the carbon insert and the ridge on the flat member is presented in Fig. 2.

### Best Mode for Carrying out the Invention

A flat member 1 is attached to hangers 12 supported by a structure of an overhead network which is not shown. Protruding from the flat member 1 downwards is an axially-disposed ridge 11 aligned with the direction of an overhead wire, which is not shown. The axially-disposed ridge 11 prevents dewirement of a trolley head 2, as the axially-disposed ridge 11 constrains the sideways position of edges 22 of a shoe body 21. Touching against the bottom of the flat member 1 is the trolley head 2 via the edges 22 of the shoe body 21. When the edges 22 of the shoe body 21 are in contact with the flat member 1, the distance a between the flat member 1 and the bottom of a groove in a carbon insert 23 is greater than the height b of the axially-disposed ridge 11 above the flat member 1. In this case, electric current is transferred via the contact between the edges 22 of the shoe body 21 with the flat member 1. Electricity may be supplied to the flat member 1 either directly from the overhead wire, or by a separate supply lead.

As the trolleybus travels, it causes the trolley head 2 to slide along the overhead wire, which gradually brings the trolley head 2 under the flat member 1 where the edges 22 of the shoe body 21 come into contact with the bottom-facing side of the flat member 1. At the same time, the contact between the carbon insert 23 with the overhead wire is interrupted because the distance a between the flat member 1 and the bottom of the groove in the carbon insert 23 is greater than the height b of the axially-disposed ridge 11 above the flat member 1. Two variants are possible at this moment. Either the trolleybus remains stationary, possibly at a stop, where its traction batteries will be recharged. In the other case, the length of the flat member 1 provides a path, which when travelled at a reduced speed enables traction batteries to be recharged within the required time without the risk of dewirement.

## Claims

1. Device for transfer of increased electric current to trolleybus through a shoe body (21) in a trolley head (2) and a member (1), particularly for recharging traction batteries, wherin an overhead wire is provided with the member (1) which is flat, from which an axially-disposed ridge (11) protrudes downwards and is aligned with the direction of the overhead wire, where the bottom of the flat member (1) is provided for contact with upper edges (22) of the shoe body (21) in the trolley head (2) on a trolley pole, **characterized in that** the distance (a) between the flat member (1) and the bottom of a groove in a carbon insert (23) is greater than the height (b) of the axially-disposed ridge (11) above the flat member (1).

## Patentansprüche

1. Vorrichtung zur Übertragung von Grossen Strömen zu Oberleitungsbussen über einen Schuhkörper (21) in einem Oberleitungskopf (2) und ein Element (1), insbesondere zum Aufladen von Antriebsbatterien, wobei eine Oberleitung mit dem Element (1) versehen ist, das flach ist und von dem ein axial angeordneter Grat (11) nach unten vorsteht und in Richtung der Oberleitung ausgerichtet ist, wobei die Unterseite des flachen Elements (1) zum Kontakt mit Oberkanten (22) des Schuhkörpers (21) im Oberleitungskopf (2) an einem Oberleitungsmast vorgesehen ist, **dadurch gekennzeichnet, dass** der Abstand (a) zwischen dem flachen Element (1) und der Unterseite einer Nut in einem Kohleeinsatz (23) größer ist als die Höhe (b) des axial angeordneten Grates (11) über dem flachen Element (1).

## Revendications

1. Dispositif pour la transmission de courants importants à un trolleybus à travers un corps de chaussure (21) dans une tête de chariot (2) et un élément (1) notamment pour recharger des batteries de traction, dans lequel un fil aérien est prévu avec l'élément (1) qui est plat , à partir de laquelle une nervure disposée axialement (11) fait saillie vers le bas et est alignée avec la direction du fil aérien, où le bas de l'élément plat (1) est prévu pour entrer en contact avec les bords supérieurs (22) du corps de chaussure (21) dans la tête de chariot (2) sur un mât de chariot, **caractérisé en ce que** la distance (a) entre l'élément plat (1) et le fond d'une rainure dans un insert en carbone (23) est supérieure à la hauteur (b) de la nervure disposée axialement (11) au-dessus de l'élément plat (1).
